# EUROPÄISCHE PATENTANMELDUNG

(11) **EP 4 283 770 A1**
(43) Veröffentlichungstag der Anmeldung: **29.11.2023**
(21) Anmeldenummer: 23172790.0
(22) Anmeldetag: 11.05.2023
(51) Int. Cl.: H01M 50/247, H01M 50/262

(54) **FEDERELEMENT UND VERSCHLUSSVORRICHTUNG FÜR AKKUHALTERUNG**

(30) Priorität: 27.05.2022 DE 102022113398
(71) Anmelder: Wacker Neuson Produktion GmbH & Co. KG, 85084 Reichertshofen (DE)
(72) Erfinder: HARTMANN, Robert, 80805 München (DE)
(74) Vertreter: Müller Hoffmann & Partner

(57) **Zusammenfassung**

Es wird ein Federelement (1) angegeben, mit einem einstückigen Grundkörper (1a) aus einem elastischen Material, der eine Erstreckung in einer Längsrichtung aufweist; wobei der Grundkörper aufweist einen ersten Funktionsbereich (2) an einem ersten Ende des Grundkörpers (1a); einen zweiten Funktionsbereich (3) an einem dem ersten Ende des Grundkörpers (1a) gegenüberliegenden zweiten Ende des Grundkörpers (1a); einen Dehnungsbereich (4), der zwischen dem ersten Funktionsbereich (2) und dem zweiten Funktionsbereich (3) angeordnet ist; wobei in dem ersten Funktionsbereich (2) eine erste Öffnung (5) zum Befestigen an einem ersten Element vorgesehen ist; wobei in dem zweiten Funktionsbereich (3) eine zweite Öffnung (6) zum Befestigen an einem zweiten Element vorgesehen ist; wobei an einem stirnseitigen Ende des ersten Funktionsbereich (2) ein erster Endanschlag (7) vorgesehen ist; und wobei an einem Übergangsbereich des ersten Funktionsbereichs (2) zu dem Dehnungsbereich (4) ein zweiter Endanschlag (8) vorgesehen ist. Das Federelement kann in einer Akkuhalterung, z.B. für eine Baumaschine eingesetzt werden, um einen Verriegelungshebel (16) in einer definierten Stellung zu halten.

## Beschreibung

Die Erfindung betrifft ein Federelement, insbesondere ein multifunktionales Federelement für eine an einer Baumaschine vorgesehene Akkuhalterung mit einer Verschlusseinrichtung.

Baumaschinen, wie z.B. Rüttelstampfer und Rüttelplatten zur Bodenverdichtung oder Fugenschneider, werden zunehmend durch Elektroantriebe angetrieben, die ihre elektrische Energie von elektrischen Energiespeichern (Akkus) beziehen, die auf der Baumaschine selbst befestigt sind. Die fortschreitende Entwicklung bei der Akkutechnik ermöglicht den Bau von kompakten Akkus mit hoher elektrischer Kapazität.

Die Akkus sind an den Baumaschinen in der Regel auswechselbar befestigt, damit ein erschöpfter Akku ohne lange Unterbrechung des Arbeitsvorgangs durch einen frischen, aufgeladenen Akku ersetzt werden kann. Dafür ist es erforderlich, dass der Akku auf der Baumaschine in einer Halterung zuverlässig gehalten wird.

Um die Aufnahme des Akkus zu sichern, ist es bekannt, eine Verschlussvorrichtung an der Akkuhalterung vorzusehen. Diese kann z.B. ein Verriegelungselement, insbesondere einen Verriegelungshebel aufweisen, der zwischen einer Offen- und einer Schließstellung bewegbar ist. In der Offenstellung kann der Akku entnommen und ausgewechselt werden. In der Schließstellung ist der Akku zuverlässig in der eigentlichen Akkuaufnahme, einer Trägereinrichtung, gesichert und kann auch bei einem harten Baustellenbetrieb, bei dem die Baumaschine starken Vibrationen ausgesetzt ist (z.B. bei einem Rüttelstampfer oder einer Rüttelplatte) zuverlässig in der Akkuhalterung gehalten werden, so dass der elektrische Strom dauerhaft dem Antriebsmotor zugeführt werden kann.

Die Verschlussvorrichtungen sind dabei in der Regel durch vorgespannte metallische Federn gesichert. Metallische Federn müssen jedoch mitunter aufwendig montiert werden, damit sie dauerhaft an ihrem Montageort verbleiben können. Zudem sind sie anfällig gegenüber Fertigungstoleranzen.

Das Einsetzen von metallischen Federn kann zudem die Fläche der die Federn tragenden Teile beschädigen, was auf die Dauer zu Korrosion führen kann.

Bei bekannten Verschlussvorrichtungen werden zudem Endanschläge aus Metall vorgesehen, bei denen z.B. eine metallische Anschlagsfläche an einem Verriegelungshebel gegen eine metallische Anschlagsfläche an der Trägereinrichtung anschlägt. Die harten Anschläge in der Verschlussvorrichtung sind für den Bediener unkomfortabel. Zur Vermeidung derart harter Anschläge müssen dann gegebenenfalls Gummipolster montiert werden.

Der Erfindung liegt daher die Aufgabe zugrunde, ein Federelement und eine Ackuhalterung mit einer Verschlussvorrichtung anzugeben, mit denen die aus dem Stand der Technik bekannten Nachteile behoben werden können.

Die Aufgabe wird gelöst durch ein Federelement mit den Merkmalen von Anspruch 1. Das Federelement kann vorteilhaft bei einer Akkuhalterung eingesetzt werden. Vorteilhafte Ausgestaltungen sind den abhängigen Ansprüchen zu entnehmen.

Es wird ein Federelement angegeben, mit einem einstückigen Grundkörper aus einem elastischen Material, der eine Erstreckung in einer Längsrichtung aufweist, wobei der Grundkörper aufweist: einen ersten Funktionsbereich an einem ersten Ende des Grundkörpers; einen zweiten Funktionsbereich an einem dem ersten Ende des Grundkörpers gegenüberliegenden zweiten Ende des Grundkörpers; einen Dehnungsbereich, der zwischen dem ersten Funktionsbereich und dem zweiten Funktionsbereich angeordnet ist, wobei in den ersten Funktionsbereich eine erste Öffnung zum Befestigen an einem ersten Element vorgesehen ist; in dem zweiten Funktionsbereich eine zweite Öffnung zum Befestigen an einem zweiten Element vorgesehen ist; an einem stirnseitigen Ende des ersten Funktionsbereichs ein erster Endanschlag vorgesehen ist; und wobei an einem Übergangsbereich des ersten Funktionsbereichs zu dem Dehnungsbereich ein zweiter Endanschlag vorgesehen ist. Das Federelement kann - wie später noch erläutert wird - vorteilhaft bei einer Akkuhalterung, insbesondere für eine Verschlussvorrichtung für eine Akkuhalterung eingesetzt werden.

Dabei ist das Federelement einstückig aus einem elastischen Material, z.B. Gummi, Elastomer oder Kunststoff, hergestellt. Der Fertigungsaufwand für die Herstellung des Federelements ist somit sehr gering im Vergleich zu der mechanisch sehr viel aufwendigeren Herstellung von Metallfedern (Spiralfedern oder Schenkelfedern), wie sie beim Stand der Technik eingesetzt werden.

Das Federelement weist den einstückigen Grundkörper auf, der im Wesentlichen drei Bereiche hat, den ersten Funktionsbereich, den zweiten Funktionsbereich und den dazwischen angeordneten Dehnungsbereich. Die drei Bereiche sind somit in Reihe bzw. in einer Linie linear hintereinander angeordnet und bilden den sich in Längsrichtung erstreckenden Grundkörper. Das Federelement kann damit insgesamt eine bandartige Erscheinung aufweisen und ähnlich einem Gummiband wirken.

In den beiden Funktionsbereichen sind jeweils Öffnungen (erste Öffnung, zweite Öffnung) vorgesehen, an denen der Grundkörper bzw. das Federelement an jeweils einem Element (erstes Element, zweites Element) befestigt werden kann. Die beiden Öffnungen dienen somit als Befestigungsöffnungen. Die beiden Elemente sind nicht Bestandteil des Federelements. Vielmehr wird das Federelement mit Hilfe der beiden Öffnungen an den beiden Elementen befestigt. Auf diese Weise können die beiden Elemente auch durch das Federelement verbunden werden. Das Federelement lässt sich somit wirkmäßig zwischen den beiden Elementen anordnen und kann so mit Hilfe von nicht Bestandteil des Federelements bildenden weiteren mechanischen Einrichtungen als Federelement arbeiten, wie später auch noch erläutert wird.

Der Dehnungsbereich kann einen gegenüber den Funktionsbereichen etwas reduzierten Querschnitt aufweisen, damit er sich bei Einsatz des Federelements gut dehnen und damit vorspannen kann, um die Federfunktion des Federelements zu erfüllen.

Die Öffnungen dienen als Befestigungsöffnungen und können z.B. an den beiden Elementen durch weitere Elemente (Schrauben, Haken, Fortsätze, Blechelemente etc.) befestigt werden.

An dem Federelement sind zudem Endanschläge vorgesehen (erster Endanschlag, zweiter Endanschlag), die als Anschläge gegenüber weiteren, später noch erläuterten Elementen dienen können.

Der Grundkörper kann in dem Bereich des ersten Endanschlags und/oder des zweiten Endanschlags einen größeren Querschnitt aufweisen, als in den Bereichen ohne Endanschlag. Das kann z.B. bedeuten, dass der Grundkörper bzw. der die Endanschläge tragende erste Funktionsbereich in dem Bereich der Endanschläge etwas breiter ist und eine größere Endanschlagsfläche bereitstellt. Auf diese Weise kann die Flächenpressung an den Endanschlägen verringert werden, wenn eine entsprechende Komponente eines anderen Bauelements an dem jeweiligen Endanschlag anschlägt.

Der Grundkörper kann im Dehnungsbereich zwei parallel zueinander angeordnete Führungsflächen aufweisen. Die Führungsflächen können z.B. seitliche Führungsflächen sein, die innerhalb der Vorrichtung, in der das Federelement verbaut ist, durch geeignete komplementäre Führungsflächen geführt werden können. Damit kann sichergestellt werden, dass das Federelement nicht seitlich ausbrechen oder sich die Befestigungsöffnungen lösen können. Zudem werden damit umliegende Bauteile durch das Federelement geschützt und zentriert. Die Zentrierung und der Materialschutz erfolgen über die Flanken bzw. Führungsflächen des Dehnungsbereichs. Auf diese Weise lassen sich auch Fertigungstoleranzen bei den umliegenden Bauteilen ausgleichen, da das elastische Federelement Toleranzen in gewissem Rahmen ausgleichen kann.

An dem ersten Funktionsbereich und/oder an dem zweiten Funktionsbereich zwischen der jeweiligen ersten oder zweiten Öffnung und einem jeweiligen stirnseitigen Ende des Funktionsbereichs kann an dem jeweiligen Ende ein Montagehilfsbereich vorgesehen sein. Der Montagehilfsbereich kann als Montagehilfe in Längsrichtung außerhalb des Bereichs zwischen den beiden Öffnungen angeordnet sein und z.B. durch einen Monteur mit seinen Händen ergriffen werden, um bei der Montage des Federelements das elastische Federelement zu ergreifen und zu dehnen. Auf diese Weise können z.B. die Befestigungsöffnungen oder wenigstens eine der Befestigungsöffnungen über einen Haken oder Fortsatz gehängt werden, so dass das Federelement sehr schnell und ohne Montagewerkzeug eingebaut werden kann.

Es wird eine Akkuhalterung angegeben, mit einer Trägereinrichtung zum Tragen eines Akkus, und mit einem Verriegelungshebel zum Sichern bzw. Verriegeln des Akkus in der Trägereinrichtung, wobei der Verriegelungshebel zwischen einer Offenstellung und einer Schließstellung bewegbar ist, und wobei wirkmäßig zwischen dem Verriegelungshebel und der Trägereinrichtung ein Federelement in der oben beschriebenen Art angeordnet ist.

Die Akkuhalterung kann insbesondere für Baumaschinen, wie z.B. Rüttelplatten, Rüttelstampfer oder Fugenschneider eingesetzt werden. Wie oben bereits erläutert, dient die Akkuhalterung zur Aufnahme eines Akkus in der Trägereinrichtung. Der Akku kann dann in der Trägereinrichtung durch den Verriegelungshebel in seiner Position gesichert werden, so dass er auch im Arbeitsbetrieb sicher in der Trägereinrichtung verbleibt. Die Schließstellung des Verriegelungshebels stellt insoweit auch eine Verriegelungsstellung dar.

Die Trägereinrichtung zusammen mit dem Verriegelungshebel und dem Federelement bilden eine Verschlusseinrichtung für die Akkuhalterung.

Das Federelement oder gegebenenfalls auch mehrere Federelemente sind zwischen dem Verriegelungshebel und der Trägereinrichtung wirkmäßig angeordnet. Insbesondere wirkt das Federelement bei einer Bewegung des Verriegelungshebels. Der Verriegelungshebel kann durch das Federelement aufgrund einer Vorspannung des Federelements in der Schließstellung, gehalten werden. Bei einem Verschwenken oder Bewegen des Verriegelungshebels aus der Schließstellung in die Offenstellung wird das Federelement gedehnt, so dass der Verriegelungshebel vom Bediener gegen die Wirkung Federkraft bewegt bzw. in der Offenstellung gehalten werden muss. Dadurch ist der Verriegelungshebel stets in seiner Stellung definiert. Eine Zwischenstellung zwischen der Offenstellung und der Schließstellung ohne Gegenhalten durch einen Bediener des Verriegelungshebels ist nicht möglich, weil dann das Federelement oder die mehreren Federelemente den Verriegelungshebel in die Schließstellung zwingen.

Beim Bewegen des Verriegelungshebels in die Offenstellung kann der Akku gelöst und aus der Trägereinrichtung entnommen werden.

Das Federelement kann mit seiner ersten Öffnung an dem Verriegelungshebel befestigt sein und mit seiner zweiten Öffnung an der Trägereinrichtung befestigt sein. Damit kann sich das Federelement gegen die Trägereinheit abstützen und die Bewegung des Verriegelungshebels mit einer Federkraft (Zwangskraft) beaufschlagen, um - wie oben erläutert - die Schließstellung des Verriegelungshebels zu erzwingen. Der Verriegelungshebel kann mit einem Teilbereich die erste Öffnung durchdringen. Z.B. kann der Verriegelungshebel aus einem gebogenen Blechteil bestehen, über das das Federelement mit seiner ersten Öffnung gezogen werden kann, in eine vorgesehene Montagestellung.

Alternativ kann an dem Verriegelungshebel auch eine andere geeignete Befestigungsmöglichkeit, z.B. ein Hakenelement ausgebildet sein, an dem die erste Öffnung des Federelements befestigbar ist.

An dem Verriegelungshebel kann wenigstens eine Ausnehmung zum Halten des Federelements in einer vorbestimmten Funktionsstellung vorgesehen sein. Die Ausnehmung am Verriegelungshebel ist geeignet, dass die erste Öffnung darüber gezogen wird und die Ausnehmung umschließt. Die Ausnehmung dient dann zur Fixierung des Federelements auf dem Verriegelungshebel in der vorbestimmten Funktionsstellung, in der das Federelement auch im Betrieb, z.B. bei einem Bewegen des Verriegelungshebels, sicher verbleiben soll. Das Federelement kann sich dann nicht mehr ohne Weiteres relativ zu dem Verriegelungshebel verschieben.

An der Trägereinrichtung kann ein Fortsatz vorgesehen sein, wobei der Fortsatz die zweite Öffnung des Federelements durchdringt. Der Fortsatz kann dabei ähnlich wie ein Haken in die zweite Öffnung des Federelements eindringen und das Federelement auf diese Weise festhalten. Bei entsprechender Ausgestaltung von Trägereinrichtung und Verriegelungshebel kann dann das Federelement sich dazwischen erstrecken, in einem vorgespannten Zustand.

Der Montagehilfsbereich des Federelements kann zwischen der zweiten Öffnung und dem stirnseitigen Ende des zweiten Funktionsbereichs vorgesehen sein, wobei der Montagehilfsbereich zugänglich ist, um bei einem Montagevorgang die zweite Öffnung des Federelements über den Fortsatz zu ziehen.

Der Monteur kann damit das Federelement an dem z.B. ähnlich einer Lasche oder einem Bandelement ausgebildeten Montagehilfsbereich ergreifen und die zweite Öffnung über den Fortsatz an der Trägereinrichtung ziehen. Der Fortsatz hält dann die zweite Öffnung wie ein Haken fest.

An der Trägereinrichtung können Anschläge vorgesehen sein, die mit den Endanschlägen des Federelements zusammenwirken. Die Endanschläge des Federelements dienen insbesondere dazu, in den Endstellungen des Verriegelungshebels (Offenstellung, Schließstellung) zu wirken und den Verriegelungshebel gegen die Trägereinrichtung abgepuffert, ohne direkten Kontakt von Metall zu Metall zu halten. Die Anschläge bzw. Endanschläge wirken somit zwischen dem Verriegelungshebel und der Trägereinrichtung.

An der Trägereinrichtung kann ein erster Anschlag (Öffnungsanschlag) vorgesehen sein, der mit dem ersten Endanschlag zusammenwirkt, wenn der Verriegelungshebel in Offenstellung steht. Der Verriegelungshebel liegt dann an der Trägereinrichtung am ersten Anschlag an, mit dazwischen als Puffer wirkendem Teil des Federelements.

An der Trägereinrichtung kann ein zweiter Anschlag (Schließanschlag) vorgesehen sein, der mit dem zweiten Endanschlag zusammenwirkt, wenn der Verriegelungshebel in Schließstellung steht. Analog zum ersten Anschlag wirkt der zweite Anschlag, wenn der Verriegelungshebel in Schließstellung an der Trägereinrichtung anliegt, mit dazwischen als Pufferelement dienendem Teil des Federelements.

Diese und weitere Vorteile und Merkmale der Erfindung werden nachfolgend anhand von Beispielen unter Zuhilfenahme der begleitenden Figuren näher erläutert. Es zeigen:
- **Fig. 1**: in Perspektivansicht ein erfindungsgemäßes Federelement;
- **Fig. 2**: einen Teilausschnitt aus einer Akkuhalterung, mit einem Verriegelungshebel in Schließstellung, jedoch ohne Federelement;
- **Fig. 3**: die Situation von Fig. 2, jedoch mit eingebautem Federelement;
- **Fig. 4**: die Situation von Fig. 3 in Perspektivansicht;
- **Fig. 5**: eine vergrößerte Teilansicht der Akkuhalterung, entsprechend der Situation von Fig. 4, jedoch mit zwei Federelementen;
- **Fig. 6**: eine Perspektivansicht einer Akkuhalterung mit zwei Federelementen und einem Verriegelungshebel in Schließstellung,
- **Fig. 7**: eine Darstellung analog zu Fig. 3, jedoch mit dem Verriegelungshebel in Offenstellung;
- **Fig. 8**: eine andere Perspektivansicht der Akkuhalterung, mit dem Verriegelungshebel in Schließstellung; und
- **Fig. 9**: eine Perspektivansicht analog zu Fig. 8, jedoch mit dem Verriegelungshebel in Offenstellung.

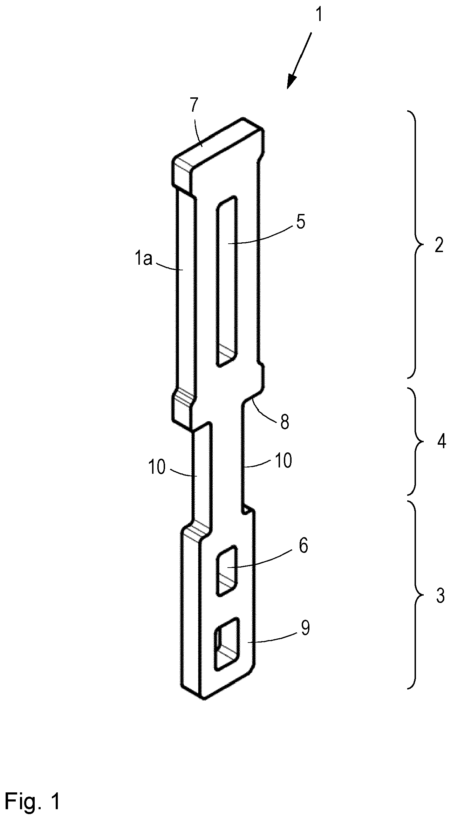

Fig. 1 zeigt in Perspektivansicht ein Federelement 1 mit einem einstückigen Grundkörper 1a aus einem elastischen Material, z.B. Gummi, Elastomer, oder einem elastischen Kunststoff.

Das Federelement 1 weist einen ersten Funktionsbereich 2 und einen zweiten Funktionsbereich 3 auf. Zwischen den Funktionsbereichen 2, 3 ist ein Dehnungsbereich 4 vorgesehen.

Der Dehnungsbereich 4 weist einen leicht reduzierten Querschnitt gegenüber den Funktionsbereichen 2, 3 auf, der auch als Talliierung verstanden werden kann.

In dem ersten Funktionsbereich 2 ist eine erste Öffnung 5 und in dem zweiten Funktionsbereich 3 ist eine zweite Öffnung 6 vorgesehen. Die beiden Öffnungen 5, 6 dienen zum Befestigen an entsprechenden Komponenten einer Akkuhalterung, wie später noch erläutert wird.

Am oberen stirnseitigen Ende des ersten Funktionsbereichs 2 ist ein erster Endanschlag 7 vorgesehen.

An einem Übergangsbereich des ersten Funktionsbereichs 2 zum Dehnungsbereich 4 ist ein zweiter Endanschlag 8 vorgesehen.

Am in Fig. 1 unteren Ende, zwischen der zweiten Öffnung 6 und dem stirnseitigen Ende des zweiten Funktionsbereichs 3 ist eine Montagehilfe 9 in Form einer Lasche vorgesehen. Die Montagehilfe 9 kann von einem Bediener mit seinen Händen ergriffen werden, um das Federelement 1 bei der Montage über entsprechende Befestigungsmittel zu ziehen.

Im Dehnungsbereich 4 sind an den Flanken seitliche Führungsflächen 10 vorgesehen, die durch dasjenige Element geführt werden können, in das das Federelement 1 eingebaut werden soll. Auf diese Weise kann auch das Federelement 1 Toleranzen an den beteiligten Elementen ausgleichen oder eine Zentrierung der Elemente bewirken.

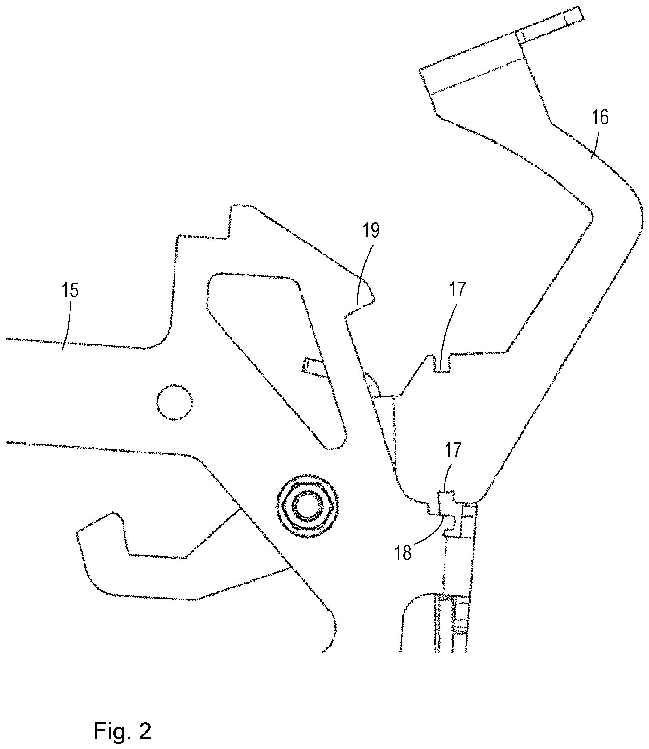

Fig. 2 zeigt in einer seitlichen Teilansicht einen Ausschnitt einer Akkuhalterung, die z.B. bei einer Baumaschine zum Einsatz kommen kann.

Die Akkuhalterung weist eine Trägereinrichtung 15 und einen relativ zu der Trägereinrichtung 15 verschwenkbar gehaltenen Verriegelungshebel 16 auf. Wie später noch erläutert wird, können auch zwei oder mehr Verriegelungshebel 16 vorgesehen sein, um den nicht dargestellten Akku in der Trägereinrichtung 15 zu sichern.

Der Verriegelungshebel 16 kann insbesondere zwischen einer Offenstellung und einer in Fig. 2 gezeigten Schließstellung relativ zu der Trägereinrichtung 15 verschwenkt werden.

Der Aufbau einer derartigen Akkuhalterung ist an sich bekannt und muss daher an dieser Stelle nicht weiter erläutert werden.

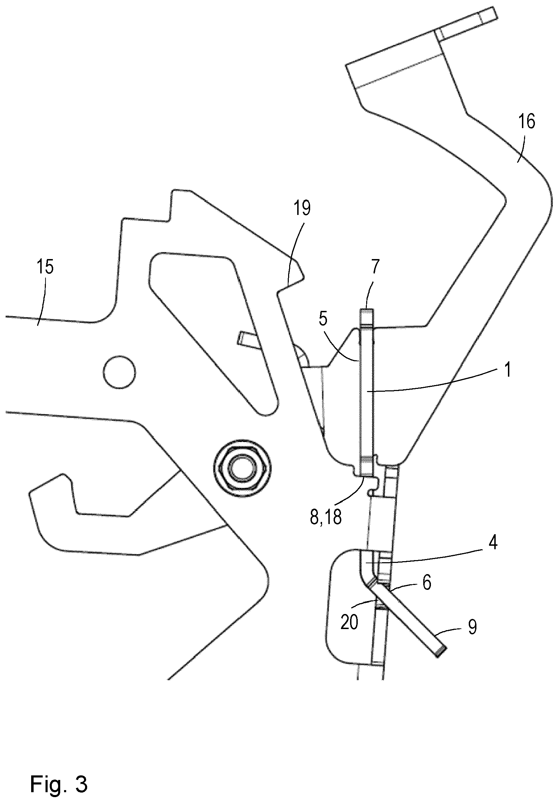

Der Verriegelungshebel 16 ist aus einem umgeformten, z.B. mehrfach gebogenen Blechteil gefertigt und weist zwei Ausnehmungen 17 auf, auf die, wie später noch in Fig. 3 gezeigt, die erste Öffnung 5 des Federelements 1 aufgezogen werden kann. Der Abstand der Ausnehmungen 17 ist derart dimensioniert, dass er gleich oder größer ist als die in Fig. 1 gezeigte Höhe der ersten Öffnung 5, so dass das Federelement 1 mit der ersten Öffnung 5 dauerhaft zuverlässig in den Ausnehmungen 17 auf dem Verriegelungshebel 16 gehalten werden kann.

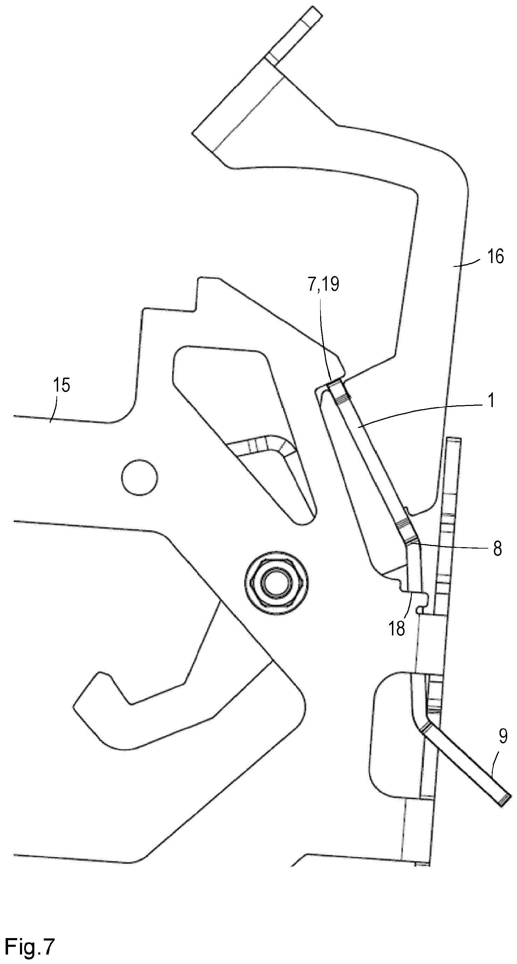

Die Trägereinrichtung 15 kann ebenfalls als komplexes Blechteil hergestellt werden. Sie weist einen Schließanschlag 18 auf, an dem der Verriegelungshebel 16 in einer in Fig. 3 gezeigten Schließstellung anschlagen kann. Weiterhin weist die Trägereinrichtung 15 einen Öffnungsanschlag 19 auf, an dem der Verriegelungshebel in seiner Offenstellung anschlagen kann (später anhand von Fig. 7 erläutert).

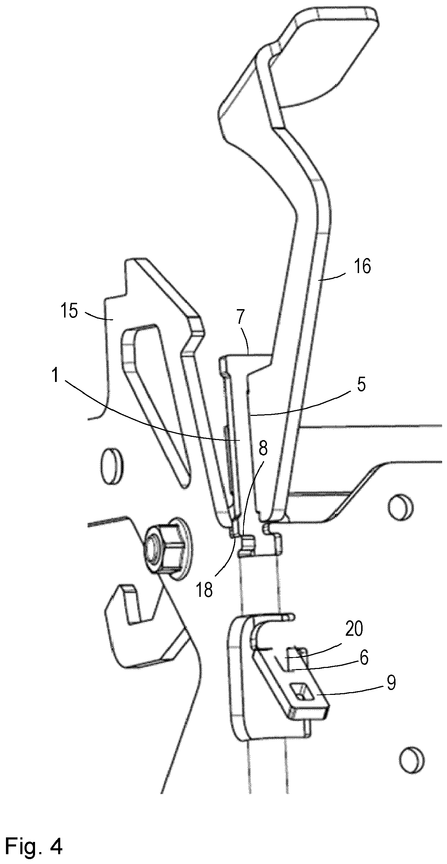

Fig. 3 zeigt die Ansicht von Fig. 2, jedoch mit montiertem Federelement 1. Fig. 4 zeigt die gleiche Situation in Perspektivansicht.

Insbesondere ist die erste Öffnung 5 des Federelements 1 auf den Verriegelungshebel 16 aufgeschoben, wie oben bereits erläutert.

Weiterhin sind der untere, zweite Funktionsbereich 3 mit Hilfe der Montagehilfe 9 nach unten und die zweite Öffnung 6 über ein Hakenelement 20 an der Trägereinrichtung 15 gezogen worden. Dadurch entsteht in dem Dehnungsbereich 4 eine Dehnung, die eine Vorspannung des Federelements 1 bewirkt. Damit wird der Verriegelungshebel 16 in der in Fig. 3 gezeigten Schließstellung gehalten.

Der zweite Endanschlag 8 schlägt in dieser Schließstellung gegen den Schließanschlag 18 der Trägereinrichtung 15 an. Da der zweite Endanschlag 8 als Bestandteil des Federelements 1 gummielastische Eigenschaften aufweist, erfolgt der Anschlag weich. Ein Metall-Metall-Kontakt wird vermieden.

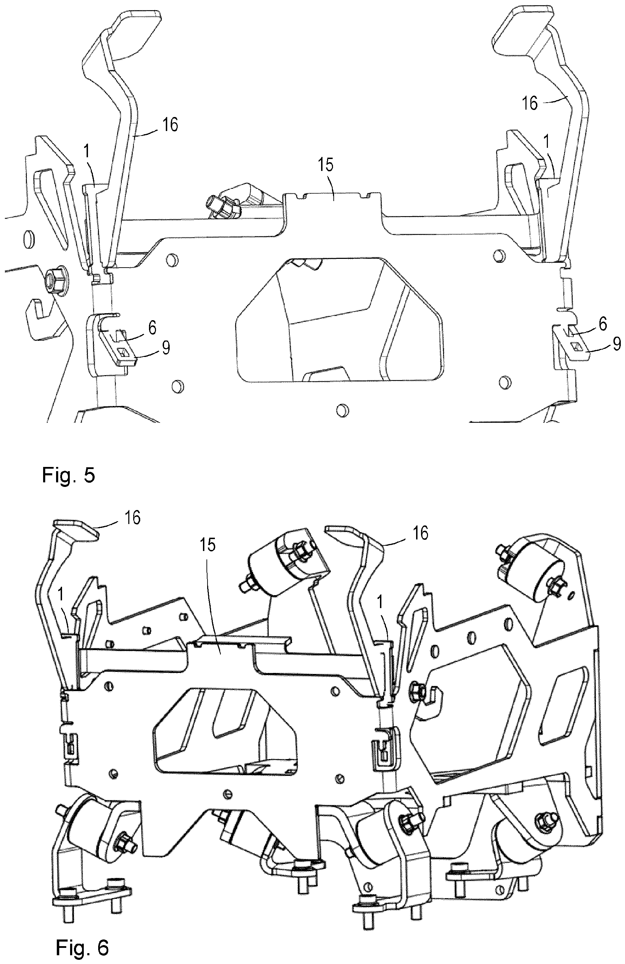

Fig. 5 zeigt die Situation der Fig. 3 und 4, jedoch in einer größeren Teilansicht, bei der auch erkennbar ist, dass zwei Verriegelungshebel 16 vorgesehen sind, die beide jeweils relativ zu der Trägereinrichtung 15 verschwenkbar sind.

Fig. 6 schließlich zeigt die vollständige Akkuhalterung in Perspektivansicht. Die Akkuhalterung ist in dem gezeigten Beispiel schwingungsentkoppelt über zwischengeordnete Gummipuffer auf einer Halterung gelagert. Die Halterung erlaubt einen Einbau der schwingungsentkoppelten Akkuhalterung in einer nicht dargestellten Baumaschine.

Fig. 7 zeigt eine Seitenansicht vergleichbar mit der von Fig. 3, jedoch mit dem Verriegelungshebel 16 in Offenstellung. Dazu muss der Bediener den Verriegelungshebel 16 gegen die Wirkung des Federelements 1 bewegen. Der erste Anschlag 7 schlägt dabei gegen den Öffnungsanschlag 19 an. Aufgrund des federelastischen Materials des Federelements 1 erfolgt der Anschlag weich. Ein Metall-Metall-Kontakt wird vermieden.

Beim Bewegen des Verriegelungshebels 16 aus der in den Fig. 2 und 3 gezeigten Schließstellung in die Offenstellung von Fig. 7 wird das Federelement 1 gedehnt, so dass sich seine Federkraft erhöht. Der Bediener muss die Federkraft überwinden, um den Verriegelungshebel 16 in die Offenstellung zu bewegen. Wenn der Bediener den Verriegelungshebel 16 loslässt, wird der Verriegelungshebel 16 durch die Wirkung des Federelements 1 wieder in die Schließstellung (Fig. 2 und 3) bewegt.

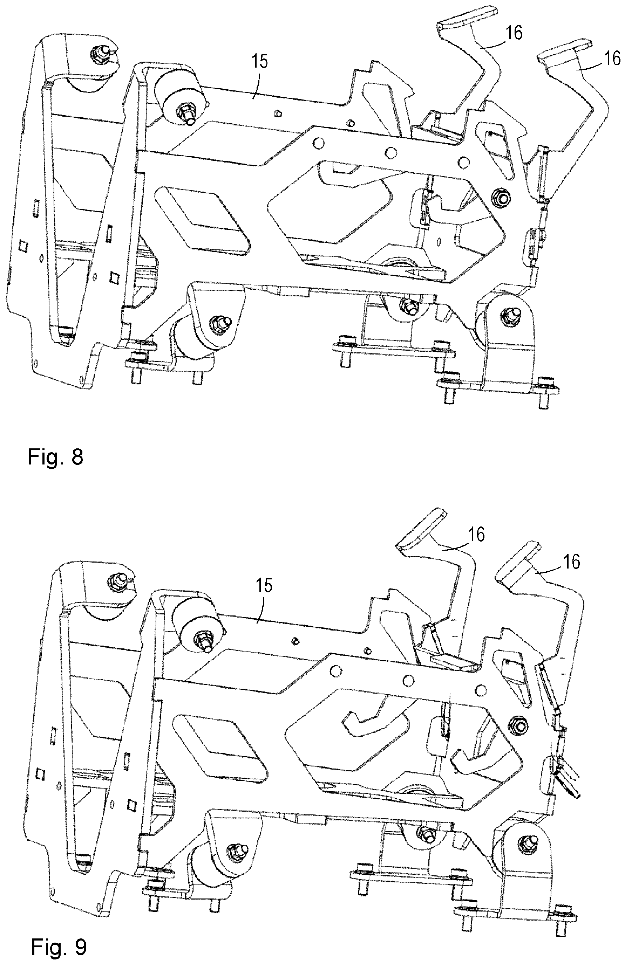

Die Fig. 8 und 9 zeigen nochmals eine Übersichtsdarstellung der gesamten Ackuhalterung. In Fig. 8 befinden sich die beiden Verriegelungshebel 16 in Schließstellung. In Fig. 9 stehen die beiden Verriegelungshebel 16 in Offenstellung.

Durch die Wirkung der zwischen der Trägereinrichtung 15 und den Verriegelungshebeln 16 verbauten Federelemente 1 werden die Verriegelungshebel 16 jeweils in einer definierten Endstellung (Schließstellung) gehalten.

## Patentansprüche

1. Federelement (1), mit einem einstückigen Grundkörper (1a) aus einem elastischen Material, der eine Erstreckung in einer Längsrichtung aufweist;
wobei der Grundkörper aufweist:
- einen ersten Funktionsbereich (2) an einem ersten Ende des Grundkörpers (1a);
- einen zweiten Funktionsbereich (3) an einem dem ersten Ende des Grundkörpers (1a) gegenüberliegenden zweiten Ende des Grundkörpers (1a);
- einen Dehnungsbereich (4), der zwischen dem ersten Funktionsbereich (2) und dem zweiten Funktionsbereich (3) angeordnet ist;
wobei
- in dem ersten Funktionsbereich (2) eine erste Öffnung (5) zum Befestigen an einem ersten Element vorgesehen ist;
- in dem zweiten Funktionsbereich (3) eine zweite Öffnung (6) zum Befestigen an einem zweiten Element vorgesehen ist;
- an einem stirnseitigen Ende des ersten Funktionsbereich (2) ein erster Endanschlag (7) vorgesehen ist; und wobei
- an einem Übergangsbereich des ersten Funktionsbereichs (2) zu dem Dehnungsbereich (4) ein zweiter Endanschlag (8) vorgesehen ist.

2. Federelement nach Anspruch 1, wobei der Grundkörper (1a) in dem Bereich des ersten Endanschlags (7) und/oder des zweiten Endanschlags (8) einen größeren Querschnitt aufweist als in den Bereichen ohne Endanschlag.

3. Federelement nach einem der vorstehenden Ansprüche, wobei der Grundkörper (1a) im Dehnungsbereich (4) zwei parallel zueinander angeordnete Führungsflächen (10) aufweist.

4. Federelement nach einem der vorstehenden Ansprüche, wobei an dem ersten Funktionsbereich (2) und/oder an dem zweiten Funktionsbereich (3) zwischen der jeweiligen ersten Öffnung (5) oder zweiten Öffnung (6) und einem jeweiligen stirnseitigen Ende des Funktionsbereichs (2, 3) ein Montagehilfsbereich (9) vorgesehen ist.

5. Akkuhalterung, mit
- einer Trägereinrichtung (15) zum Tragen eines Akkus; und mit
- einem Verriegelungshebel (16) zum Sichern des Akkus in der Trägereinrichtung (15);
wobei
- der Verriegelungshebel (16) zwischen einer Offenstellung und einer Schließstellung bewegbar ist; und wobei
- wirkmäßig zwischen dem Verriegelungshebel (16) und der Trägereinrichtung (15) ein Federelement (1) gemäß einem der vorstehenden Ansprüche angeordnet ist.

6. Akkuhalterung nach Anspruch 5, wobei das Federelement (1) mit seiner ersten Öffnung (5) an dem Verriegelungshebel (16) befestigt ist und mit seiner zweiten Öffnung (6) an der Trägereinrichtung (15) befestigt ist.

7. Akkuhalterung nach einem der Ansprüche 5 oder 6, wobei der Verriegelungshebel (16) mit einem Teilbereich die erste Öffnung (5) durchdringt.

8. Akkuhalterung nach einem der Ansprüche 5 bis 7, wobei an dem Verriegelungshebel (16) wenigstens eine Ausnehmung (17) zum Halten des Federelements (1) in einer vorbestimmten Funktionsstellung vorgesehen ist.

9. Akkuhalterung nach einem der Ansprüche 5 bis 8, wobei
- an der Trägereinrichtung (15) ein Fortsatz (20) vorgesehen ist; und wobei
- der Fortsatz (20) die zweite Öffnung (6) des Federelements (1) durchdringt.

10. Akkuhalterung nach einem der Ansprüche 5 bis 9, wobei
- der Montagehilfsbereich (9) des Federelements (1) zwischen der zweiten Öffnung (6) und dem stirnseitigen Ende des zweiten Funktionsbereichs (3) vorgesehen ist; und wobei
- der Montagehilfsbereich (9) zugänglich ist, um bei einem Montagevorgang die zweite Öffnung (6) des Federelements (1) über den Fortsatz (20) zu ziehen.

11. Akkuhalterung nach einem der Ansprüche 5 bis 10, wobei an der Trägereinrichtung (15) Anschläge (18, 19)) vorgesehen sind, die mit den Endanschlägen (7, 8) des Federelements (1) zusammenwirken.

12. Akkuhalterung nach einem der Ansprüche 5 bis 11, wobei an der Trägereinrichtung (15) ein erster Anschlag (19) vorgesehen ist, der mit dem ersten Endanschlag (7) zusammenwirkt, wenn der Verriegelungshebel (16) in Offenstellung steht.

13. Akkuhalterung nach einem der Ansprüche 5 bis 12, wobei an der Trägereinrichtung (15) ein zweiter Anschlag (18) vorgesehen ist, der mit dem zweiten Endanschlag (8) zusammenwirkt, wenn der Verriegelungshebel (16) in Schließstellung steht.
